# EUROPEAN PATENT SPECIFICATION

(11) **EP 2 626 143 B1**
(45) Date of publication and mention of the grant of the patent: **23.01.2019**
(21) Application number: 12155042.0
(22) Date of filing: 13.02.2012
(51) Int. Cl.: B05B 13/06, B08B 9/08, B08B 9/093, B01F 5/02, B01F 5/10, B05B 3/06, G01N 27/04

(54) **Monitoring of liquid ejection system**
Überwachung eines Flüssigkeitsausgabesystems
Surveillance de système d'éjection de liquide

(43) Date of publication of application: 14.08.2013
(73) Proprietor: Alfa Laval Corporate AB, 221 00 Lund (SE)
(72) Inventor: Madsen, Karsten Schack, 5000 Odense C (DK); Brandt, Claus, 2630 Taastrup (DK); Hansen, Henrik, 4340 Tølløse (DK)
(74) Representative: Alfa Laval Attorneys

(56) References cited:
- EP-A2- 1 882 914
- DE-B3-102006 034 882
- "Edelstahl-Reinigungstechnik , CIP-Monitoring System (CIPMon SC)", INTERNET CITATION, November 2006 (2006-11), pages 98-100, XP002680355, Retrieved from the Internet: URL:http://www.awh.de/pdf/deutsch/AWH-RT7- -1106-dt.pdf [retrieved on 2012-07-11]
- ALFA LAVAL: "Increase Quality Assurance by Verifying Coverage", , August 2003 (2003-08), XP002684863, Retrieved from the Internet: URL:http://www.adejongth.nl/downloads/rota check.pdf [retrieved on 2012-10-09]

## Description

### Technical Field

The invention relates to systems for internal cleaning of tanks and/or for mixing of contents in tanks, and in particular to techniques for monitoring the operation of such systems.

### Background Art

Liquid containment tanks or containers are used in a number of industrial processes such as food manufacturing, pharmaceutical manufacturing, chemical processing, material fermentation and so on. It is often critical to ensure that the interior of the tank is free of unwanted debris and contaminants. For example, a tank that is typically filled to a certain level may exhibit a "tub ring" about its interior circumference at the level to which the tank is most often filled. Also, various equipment within a tank, tank inlets and outlets etc. may trap sediment or debris that may later reenter the tank contents during use.

Unwanted contaminants in the tank may negatively impact the quality of the finished product being manufactured or processed. Also, the interior of a tank must be properly cleaned if regulations relevant to certain industries such as pharmaceutical processing shall be followed. Thus, it is common to clean the interior of such tanks at certain intervals, e.g. after each process batch, to ensure product quality and adherence to any relevant regulations.

Tank cleaning systems are available that clean debris and residue from the interior of tanks and other vessels through the use of what is commonly known as impingement cleaning. One common type of such systems employs a cleaning apparatus that is inserted into the tank and which has a pipe that extends into the tank. At an innermost end of the pipe a rotary spray head that is affixed. The rotary spray head is rotatable about one or two axes and, in the latter case, is typically geared such that as the spray head rotates about an axis of the pipe, it also turns upon an axis perpendicular to the pipe.

A relationship between rotations about two axes depends on a gearing ratio, which is selected such that a combination of a particular orientation and position of the spray head repeats only after multiple revolutions around the axis of the pipe. This technique staggers subsequent traces of the spray against a tank interior on each revolution of the rotary head to ensure that substantially every portion of the tank interior is exposed to the cleaning spray at some time during the cleaning process. The accomplished traces of the spray against the tank provides a cleaning apparatus that sprays cleaning liquid in a predetermined pattern on the interior surface of the tank.

To ensure that the interior of a tank is adequately cleaned the cleaning liquid should be sprayed in the predetermined pattern. Alternatively, a cleaning duration may be prolonged, which however may lead to excessive waste of time, cleaning fluid, and energy.

To ensure adequate cleaning while still avoiding excessive waste some different techniques have been employed. For example, patent document US 2008/0142042 A1 discloses a tank cleaning system that allows for a cleaning process to be monitored and provides a cleaning validation. This is done by automatically accounting for characteristics of a tank being cleaned and by modifying the cleaning operation accordingly. Other techniques use a liquid sensor for sensing a cleaning liquid jet and unit for determining, based on a signal output from the liquid sensor, whether there is abnormality in a rotation of the jet, which may hamper adequate cleaning.

The cleaning apparatus may also be used for mixing a content of the tank. This is typically done by filling the tank with the content until the rotary spray head is fully underneath a surface of the content. The content is then mixed by circulating it from an outlet of the tank and back into the tank via the rotary spray head. As with cleaning, mixing must be adequately performed and it is important that this may be done without e.g. excessive circulation of content. When a tank cleaning apparatus is capable of also performing mixing of a content of the tank, the apparatus is often referred to as a liquid ejection apparatus.

The document called "Edelstahl-Reinigungstechnik , CIP-Monitoring System (CIPMon SC)" on pages 98-100, published 11/2006 by Armaturenwerke Hötensleben GmbH, shows a monitoring arrangement according to the preamble of claim 1 and a method of monitoring according to the preamble of claim 13.

Even though present techniques in some cases successfully ensure that cleaning of the interior of tanks or mixing of a content of a tank is accomplished, there may be problems in some cases, for example because of the size and shape of the tank, the type of substance to be cleaned of from the tank interior or mixed in the tank, varying climate conditions in the environment surrounding the tank, irregular or deficient behavior of components cooperating with the liquid ejection apparatus etc. Thus, it is estimated that improvements may be made in respect of more accurately verifying or determining that adequate cleaning and/or mixing is accomplished.

### Summary

It is an object of the invention to improve the above techniques and the prior art. In particular, it is an object to provide a liquid ejection system that may take unforeseeable factors into account when determining if adequate cleaning of a tank or mixing of a tank content has been accomplished.

To solve these objects a monitoring arrangement is provided for a liquid ejection system that comprises a liquid ejection apparatus having a pipe configured to extend into a tank and to receive a liquid, wherein a rotary head is arranged on the pipe and is fitted with a fluid nozzle for ejecting the liquid in a pattern towards an interior surface of the tank. The monitoring arrangement comprises a sensor unit configured to be mounted to the tank such that the sensor unit generates a signal indicative of liquid coming into contact with the interior surface of the tank, and a processing unit configured to receive from the sensor unit the signal indicative of liquid coming into contact with the interior surface of the tank. The processing unit is configured to: retrieve from a memory unit a reference property that is indicative of liquid coming into contact with the interior surface; register, during a measuring period when the fluid nozzle ejects liquid towards the interior surface of the tank, at least one current property of the signal generated by the sensor unit; compare the current property with the reference property; and initiate, if the current property deviates from the reference property beyond a predetermined level, a message indicative of the deviation.

The liquid ejection apparatus typically performs cleaning or mixing. Generally, after a mixing operation is complete a cleaning operation may commence. During a cleaning operation, the liquid coming into contact with the interior surface of the tank is typically a liquid jet or beam that impinges directly on the tank surface. During a mixing operation, the liquid coming into contact with the interior surface of the tank is typically a wave or stream of liquid that that flows, in a body of liquid, in a direction towards the tank surface. The predetermined level is typically a level that is indicative of insufficient cleaning or mixing. Exactly which level is employed depend on the cleaning or mixing requirements. The reference property may be a numerical value that corresponds to a current value when satisfactory cleaning or mixing is obtained. Thus, the monitoring will readily detect if the system somehow malfunction, since the current property would then deviate to much from the reference property, with the result that a signal indicative of the malfunction is initiated. The signal allows in turn an operator to take action in respect of the malfunction, for example by performing maintenance or repair of the system. Herein, "property" may be understood as a "measurement value" or just "value", i.e. the reference property may be understood as e.g. a reference value and the current property may be understood e.g. as a current measurement value.

The processing unit may be configured to: register, during an initiation period when the fluid nozzle ejects liquid towards the interior surface, at least one current property of the signal; and store the current property of the signal as the reference property in the memory unit. This operation is typically performed when it is certain that adequate cleaning or mixing is obtained, such that the reference property thereby represents a system that functions properly.

As indicated, the measuring period may be associated with cleaning of the interior surface of the tank, or with mixing of a liquid content of the tank.

The property retrieved from the memory unit may comprise any of: a duration between signal impulses, a duration of a signal impulse, a signal amplitude value, a signal frequency value and a signal pattern.

The processing unit of the invention is also configured to: register, during a further measuring period when the fluid nozzle ejects liquid towards the interior surface, at least one current property of the signal; and store the current property of the signal as the reference property in the memory unit. This is typically done after the initiation period mentioned above, e.g. when the system shall be recalibrated by resetting the reference property.

The processing unit may also be configured to iteratively: register, during a further measuring period when the fluid nozzle ejects liquid towards the interior surface, at least one current property of the signal; compare the current property with the reference property; and initiate, if the current property deviates from the reference property beyond a predetermined level, a message indicative of the deviation. This means that the monitoring arrangement continuously may monitor a performance of the system.

The sensor unit may be configured to be mounted inside the tank such that the sensor unit is subjected to liquid when the fluid nozzle ejects liquid, and generate a signal indicative of liquid coming into contact with the sensor unit.

The sensor unit may be a pressure sensor with a sensing surface that extends over a distance of at least 1 cm along the interior surface of the tank.

According to another aspect of the invention a liquid ejection system is provided, which system comprises: a liquid ejection apparatus having a pipe configured to extend into a tank and to receive a liquid, wherein a rotary head is arranged on the pipe and is fitted with a fluid nozzle for ejecting the liquid in a pattern on an interior surface of the tank; and a monitoring arrangement according to above.

According to another aspect of the invention a method is provided for monitoring a liquid ejection system, which liquid ejection system comprises: an ejection apparatus having a pipe configured to extend into a tank and to receive a liquid, wherein a rotary head is arranged on the pipe and is fitted with a fluid nozzle for ejecting the liquid in a pattern on an interior surface of the tank; and a sensor unit configured to be mounted to the tank such that the sensor unit generates a signal indicative of liquid coming into contact with the interior surface of the tank. The method comprises: retrieving from a memory unit a reference property that is indicative of liquid coming into contact with the interior surface; registering, during a measuring period when the fluid nozzle ejects liquid towards the interior surface of the tank, at least one current property of the signal generated by the sensor unit; comparing the current property with the reference property; and initiating, if the current property deviates from the reference property beyond a predetermined level, a message indicative of the deviation. The method further comprises to register, during a further measuring period when the fluid nozzle ejects liquid towards the interior surface, at least one current property of the signal, and store the current property of the signal as the reference property in the memory unit.

The liquid ejection system and the method according to the invention may include any of the functionality implemented by the features described above in association with the monitoring arrangement and shares the corresponding advantages. For example, the method may include a number of steps corresponding to operations of various units and devices of the monitoring arrangement.

Still other objectives, features, aspects and advantages of the invention will appear from the following detailed description, from the attached claims as well as from the drawings.

### Brief Description of the Drawings

Embodiments of the invention will now be described, by way of example, with reference to the accompanying schematic drawings, in which
Fig. 1 is a schematic view of a liquid ejection system for cleaning an interior surface of a tank and/or for mixing a content of a tank, in association with an embodiment of an inventive monitoring arrangement,
Figs 2a-2c illustrate a predetermined pattern of ejected liquid as generated by the liquid ejection system in Fig. 1 at three consecutive time points,
Fig. 3 is a timing diagram illustrating the occurrence of signal pulses in a sensor signal acquired from a sensor unit in Fig. 1,
Fig. 4 is a flow chart illustrating an embodiment of a method of monitoring the liquid ejection system of Fig. 1,
Fig. 5 is a block diagram of a device that implements the monitoring process in Fig. 4, and
Fig. 6 is an embodiment of an alternative rotary head for the system of Fig. 1.

### Detailed description

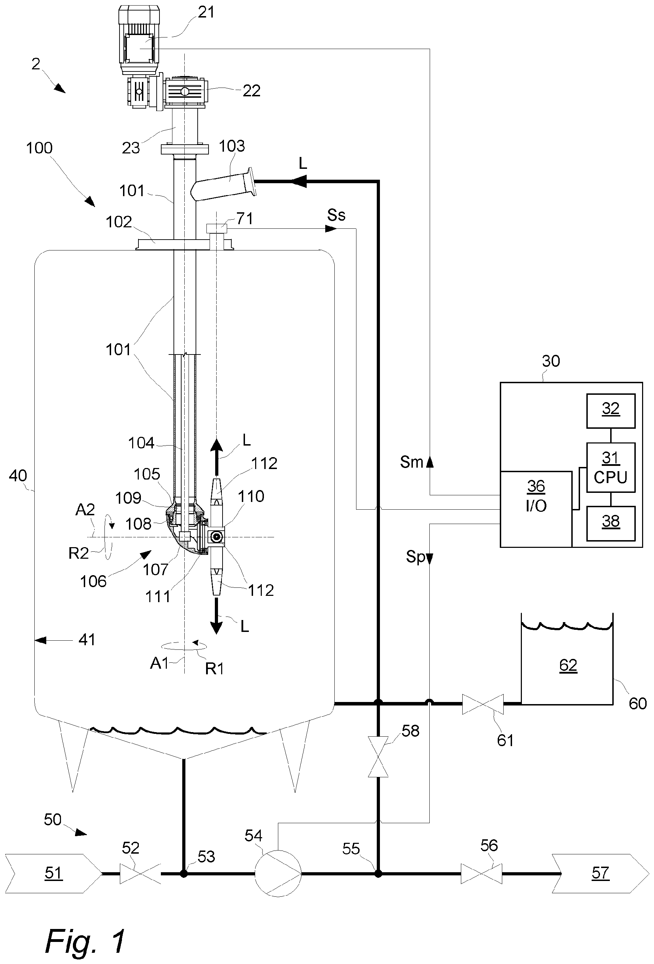

With reference to Fig. 1 an embodiment of a liquid ejection system 2 that is configured to eject a liquid L in a tank 40 is illustrated. The system 2 comprises a liquid ejection apparatus 100, a drive unit 21 for the liquid ejection apparatus 100, and a processing unit 30 that is configured to control the drive unit 21 and thereby a pattern for how liquid L is ejected from the liquid ejection apparatus 100 and into the tank 40.

The liquid ejection apparatus 100 has a pipe 101 that extends into the tank 40 via an opening in an upper part of the tank 40. The liquid ejection apparatus 100 has a flange 102 that provides a secure connection as well as a tight seal to the tank 40. An upper part of the pipe 101 that is outside the tank 40 has an inlet 103 for receiving the liquid L. A lower part of the pipe 101 that extends into the tank 40 has at its end a connection flange 105 to which a rotary head 106 is connected.

The rotary head 106 comprises a housing 107 that is rotatable around a first axis A1 that is parallel to the pipe 101. A first bearing 108 is arranged in between the connection flange 105 and an inlet end of the housing 107 that faces the connection flange 105, such that the housing 107 may rotate relatively the connection flange 105.

The rotary head 106 also comprises a rotary hub 110 on which a number of liquid ejection nozzles 112 are arranged. In the illustrated embodiment four nozzles are symmetrically arranged on the rotary hub 110 even though it is possible to have e.g. only one nozzle on the rotary hub 110. A second bearing 111 is arranged in between the rotary hub 110 and an outlet end of the housing 107 that faces the rotary hub 110, such that the rotary hub 110 may rotate relatively the housing 107. The second bearing 111 allows the rotary hub 110 to rotate about a second axis A2 that is typically offset from the first axis A1 by an angle of 80-100° (90° in the illustrated embodiment). Thus, the rotary hub 110 and the nozzles 112 are able to rotate in a first direction R1 about the first axis A1 and in a second direction R2 about the second axis A2, as seen relative the pipe 101 or relative the tank 40.

The inlet 103 and the pipe 101 each have the principal shape of a conventional pipe and are capable of transporting liquid L to be ejected into the tank 40. Liquid L enters the inlet 103, is conveyed into the pipe 101 and towards the rotary head 106. Liquid L then enters the rotary head 106 at the housings 107 connection to the connection flange 105 and exits the housing 107 at the housings 107 connection to the rotary hub 110. The rotary hub 110 receives liquid from the housing 107 and distributes liquid L further to the nozzles 112, which eject the liquid L into the tank 40 such that liquid L hits an interior surface 41 of the tank 40 (when cleaning is performed), alternatively eject the liquid L into the tank 40 such that liquid L is streamed into a content of the tank, towards the interior surface 41 of the tank 40 (when mixing is performed).

The rotation in the first direction R1 about the first axis A1 is accomplished via a shaft 104 that extends from an upper end of the pipe 101 and to the rotary head 106 where it is connected to the housing 107. The shaft 104 has a diameter that is smaller than both an inner diameter of the pipe 101, an inner diameter of the connection flange 105 and a diameter of an opening at the inlet end of the housing 107. This allows liquid L to flow past the shaft 104. When the shaft 104 is rotated, the housing 107 and thereby the rotary head 106 are rotated in the first direction R1.

The pipe 101 is connected to a connection piece 23 and a gearbox 22 is connected to the connection piece 23. The shaft 104 is connected to the gearbox 22, which in turn is connected to the drive unit 21. The drive unit 21 is here a conventional electrical motor 21, but other types of motors such as a pneumatic motor may be used just as well. When the motor 21 is activated, it generates a rotation of the shaft 104 and thereby a rotation of the rotary head 106 in the first direction R1. Alternatively, the drive unit 21 may be embodied as an impeller that is arranged in a flow path of the liquid L, e.g. after the inlet 103, where a rotation of the impeller drives the gearbox 22 and thus effects the rotation of the rotary head 106 in the first direction R1. Such an impeller is described in patent document EP1324818 A1.

To accomplish the rotation in the second direction R2 a drive member 109 in form of an impeller 109 is arranged inside the housing 107. The motor 21 and the impeller 109 form a drive unit 21, 109 that provides the rotations in the first R1 and in the second R2 directions. A rotation of the impeller 109 is induced by a flow of liquid L that passes through the housing 107, from the inlet end to the outlet end of the housing 107. When the impeller 109 rotates, its rotational movement is used for generating a rotation of the rotary head 106, or more specifically, for generating a rotation of the rotary hub 110 in the second direction R2. Any suitable technique for arranging the impeller 109 and for transferring a rotational movement of the impeller 109 to the rotary hub 110 may be employed, such as the technique disclosed in patent document EP1324818 A1.

A liquid circuit 50 is connected to the tank 40 and to the liquid ejection apparatus 100 for accomplishing a flow of liquid L that shall be ejected from the nozzles 112 and into the tank 40. The liquid circuit 50 comprises, in a downstream direction, a liquid source 51, a first valve 52, a first connection point 53, a pump 54, a second connection point 55 and a second valve 58. After the second valve 58 the liquid circuit 50 is connected to the inlet 103 of the liquid ejection apparatus 100. A bottom of the tank 40 is connected to the liquid circuit 50 at the first connection point 53. A liquid outlet 57 is via a third valve 56 connected to the second connection point 55. A second source of liquid 60 is via a fourth valve 61 connected to the tank 40.

The pump 54 may be e.g. a gear pump, a lube pump, a centrifugal pump or a pump of another suitable type. The valves 52, 56, 58, 61 may be butterfly valves, globe valves or valves of another suitable type. A liquid from the liquid source 51 is typically a liquid to be mixed in the tank 40 or a liquid that constitutes a major part of a liquid to be mixed in the tank 40. A liquid content 62 of the second source of liquid 60 may be a liquid to be mixed with the liquid from the liquid source 51, or maybe a liquid to be used for cleaning of the tank 40. Additional liquid sources may be connected to the tank 40, as required by a predetermined mixing or cleaning application.

By opening the first valve 52 and by closing the second valve 58 and the third valve 56 (or having the pump 54 inactive, depending on pump type), liquid may be fed from the liquid source 51 and into the tank 40 via the first connection point 53. In this way the tank 40 may be filled with a liquid content. When the system 2 shall perform mixing the tank 40 is typically filled to such an extent that a liquid content in the tank 40 completely covers the rotary head 106 and all the nozzles 112. Thus, a surface the liquid content is then well above the rotary head 106 and the nozzles 112.

By closing the first valve 52 and the third valve 56, opening the second valve 58 and operating the pump 54, the liquid content of the tank 40 may be circulated via the liquid circuit 50 and the liquid ejection apparatus 100. This circulation effects mixing of a liquid content since liquid L then is ejected into the liquid content, which efficiently causes the liquid content to be stirred.

By closing the first valve 52 and the second valve 58, opening the third valve 56 and operating the pump 54, liquid content may be expelled from the tank 40 by transporting it to the liquid outlet 57. In this context, when liquid content is expelled, some content is typically still present in the tank 40, i.e. expelling a liquid content does not necessarily mean that every part of the liquid content in the tank 40 is completely removed from the tank 40. Content that is present in the tank 40 after the expelling is typically cleaned of in a cleaning process performed by the liquid ejection apparatus 100.

The liquid content 62 of the second source of liquid 60 may be introduced in the tank 40 by opening the fourth valve 61. If this is done during a mixing operation the liquid content 62 of the second source of liquid 60 is efficiently mixed into the content of the tank 10.

When the system 2 shall effect cleaning of the tank 40 the liquid content 62 of the second source of liquid 60 may be a cleaning liquid. Then the liquid content 62 is introduced into the tank 40 after the (mixed) liquid content is expelled. Cleaning is then effected by closing the first valve 52 and the third valve 56, by opening the second valve 58 and by operating the pump 54. The liquid L is then a cleaning liquid that is expelled into the tank 40 and hits the inner surface 41, which efficiently effects cleaning of the inner surface 41. Generally, when cleaning is effected the cleaning liquid in the tank 40 does not cover the rotary head 106, i.e. the rotary head 106 and the nozzles 112 are then not submersed in a liquid content. Instead, the liquid is ejected in a predetermined pattern on the interior surface 41 of the tank 40.

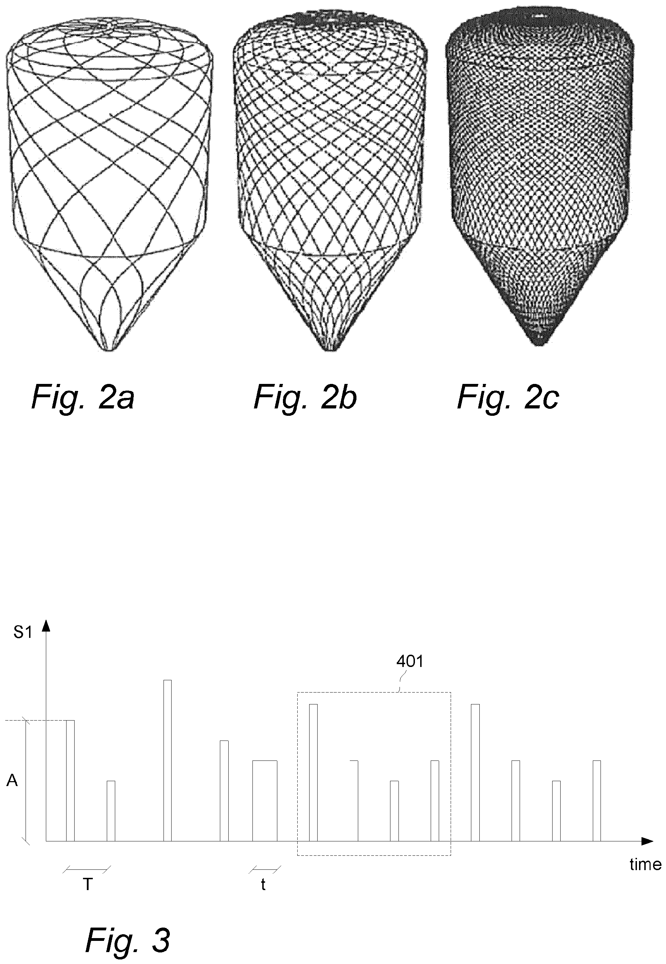

When liquid is ejected from the nozzles 112 for cleaning the interior surface 41, the rotary hub 110 rotates in the first and second directions R1, R2. Then the liquid is ejected as spray jets in a predetermined pattern on the interior surface 41. Figs 2a-2c illustrate an example of such a predetermined pattern, where the coarse pattern in Fig. 2a may be achieved after e.g. 1 minute, the denser pattern in Fig. 2b after 2.5 minutes, and a so-called full pattern as in Fig. 2c after 7 minutes. When the system 2 performs mixing the rotary hub 110 rotates in the same first and second directions R1, R2. However, then the liquid generally does not impinge on the interior surface 41, but is instead injected directly into a content of the tank. Still, the direction of the injection follows the same pattern as shown in Figs 2a-2c.

Turning back to Fig. 1, the processing unit 30 has a central processing unit 31 (CPU) that is connected to and controls an electronic input/output interface 36 (I/O). The I/O interface 36 is in turn electrically connected to the motor 21 and to the pump 54 to provide control signals Sm and Sp. The CPU 31 is a central processing unit or microprocessor of a conventional type and represents the portion of the processing unit 30 that is capable of carrying out instructions of a computer program which is stored in a memory unit 32 of the processing unit 30. The CPU 31 is the primary element carrying out the functions of the unit 30. The unit 30 further includes a user interface 38 that allows an operator to input operation parameters, various reference properties for signals, and/or that allows the unit 30 to output information about the progress of the cleaning or mixing process to the operator. This information may at least partly be computed by the unit 30, by processing a sensor signal Ss which is acquired via the I/O interface 36 from a dedicated sensor unit 71 in the tank 40.

The sensor unit 71 is fitted in the flange 102. When the liquid ejection system 2 is mounted to the tank 40, the sensor unit 71 defines a surface that faces the interior of the tank 40 and is arranged to be intermittently struck by the liquid L that is emitted by the nozzles 112 during rotation of the rotary head 106 and the rotary hub 110.

Every time the sensor unit 71 is struck by liquid, either directly by a e.g. a liquid beam from the nozzles 112 or indirectly by liquid a wave caused by liquid ejection from the nozzles 112, a signal pulse is generated. The number of times the sensor is struck during a predetermined period of time may vary, depending on e.g. the size and shape of the sensor, where the sensor is located etc. The sensor is typically mounted inside the tank 40 such that the sensor unit 71 is subjected to liquid L when the fluid nozzles 112 ejects liquid. The sensor unit may have the form of a pressure sensor with a sensing surface that has extends over a distance of at least 1 cm along the interior surface of the tank 40.

The sensor unit 71 may be based on any suitable sensor technology capable of sensing a liquid impact on the interior surface 41 of the tank 40. Such sensor technology includes sensors for direct impact detection, such as various types of pressure sensors, as well as sensors for indirect impact detection, including electric conductivity sensors, liquid detection sensors, pH sensors, vibration sensors and temperature sensors. The pressure sensor may be based on any available technology, such as piezoresistive strain gauges, piezoelectric materials, capacitive detection, electromagnetic detection, optical detection, etc. It is also conceivable that a sensing surface of the sensor unit 71 is formed by a commercially available pressure sensitive film, e.g. of plastic material, of the type that is used in touch pads for computers.

Depending on which sensor technology is implemented for the sensor unit 71, the sensor unit 71 may be responsive to direct impact from liquid, typically during a cleaning operation, as well as responsive to impact via waves or streams in a liquid content of the tank 40, typically during a mixing operation. Thus, if the sensor unit 71 is mounted to a side wall of the tank, it may be submersed in liquid during e.g. a mixing operation. However, the sensor unit is still capable of providing a sensor signal that is indicative of liquid coming into contact with the interior surface 41 of the tank 40, even though it is accomplished via a wave or a stirring motion of a content of the tank.

The sensor unit 71 may define a unitary detection surface, such that it generates a signal pulse irrespective of the location of the impact on a sensing surface (zero-dimensional detection). Such a sensor unit may e.g. generate a train of signal pulses as shown in Fig. 3. It should be noted that Fig. 3 illustrates a principal example of a sequence of pulses. In practice, depending on e.g. sensor type and whether signal processing is applied or not, the signal value and signal profile for each pulse may vary slightly.

In a variant, the sensor unit 71 may be provided with a spatial resolution in one or two dimensions, i.e. the sensor signal Ss not only indicates that liquid has hit the sensor unit 71 but also where this happened. A one-dimensional (1D) spatial resolution may be provided along the sensor unit 71, making it possible to identify the location and/or extent of the liquid that is struck by liquid. A two-dimensional (2D) spatial resolution of the sensor unit 71 will enable a full evaluation of the extent and path of liquid as it traverses the sensor unit 71. The use of spatial resolution may not only enable determination of more advanced monitoring parameters, but also improve the ability to identify/suppress interferences caused by liquid splashes, etc.

Obviously, the sensor unit 71 must not necessarily be arranged in a roof portion of the tank 40, but may be arranged at any suitable location that allows the sensor unit 71 to generate the signal Ss indicative of liquid L coming into contact with the interior surface 41 of the tank 40.

The processing unit 30 is configured to receive from the sensor unit 71 the signal Ss indicative of liquid L coming into contact with the interior surface 41 of the tank 40. The processing unit 30 is then able to use the signal Ss for monitoring the liquid ejection system 2.

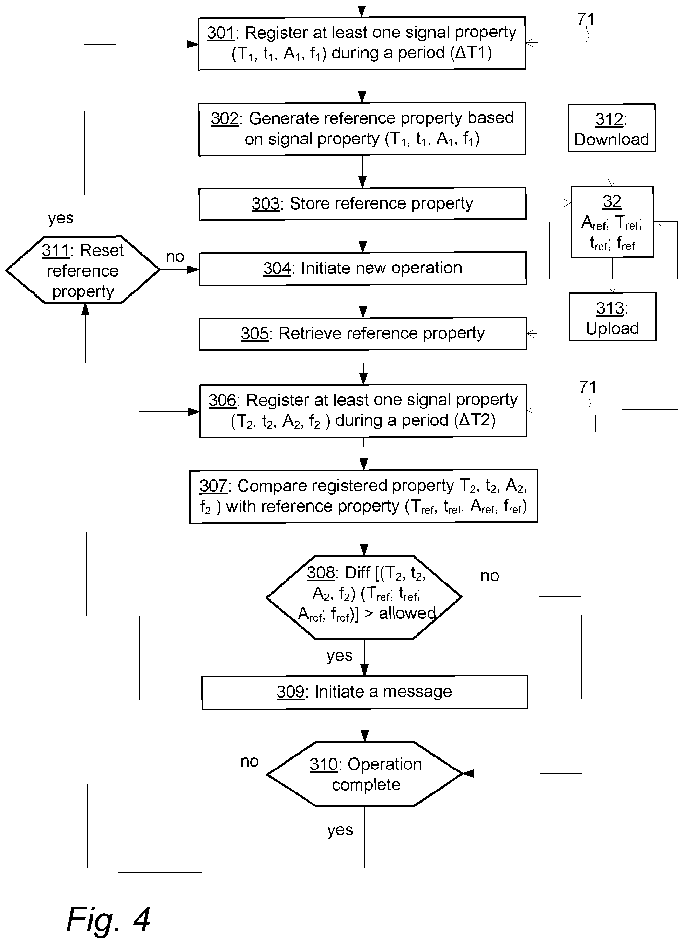

With reference to Fig. 4 is flow chart of a method of monitoring the system 2 is illustrated. The monitoring is based on the sensor signal Ss from the sensor unit 71. The method is typically automated and operates by repeatedly executing a sequence of steps 301-313. In the example of Fig.1, the monitoring method may be implemented by the processing unit 30.

The method is described by first looking on step 304 where a new liquid ejection operation is initiated. The liquid ejection operation may be a cleaning operation for cleaning the interior surface 41 of the tank 40, or may be a mixing operation for mixing a liquid content of the tank 40. How mixing respectively cleaning may be accomplished has been described in connection with Fig. 1.

In a next step 305 a reference property T_{ref}, t_{ref}, A_{ref}, f_{ref} that is indicative of liquid L coming into contact with the interior surface 41 is retrieved from the memory unit 32. Turning back to Fig. 3, the reference property may be or may comprise one or more of a duration T between signal impulses, a duration t of a signal impulse, an amplitude value A, and a frequency f value of the pulses (calculated a 1/T). The reference property may also comprise or a signal pattern, i.e. a distribution of pulses, such as the distribution of the pulses indicated by box 401 in Fig. 3, and/or may comprise other signal properties such as a timing of individual pulses, a spatial width of impacts on the sensor, a location of individual impacts on the sensor, and a number of individual pulses during a given time period. Naturally, the reference property is related to, i.e. is indicative of, the operation that currently is performed by the system 2. Typically, the reference property corresponds to signal properties that are known to be obtained from the sensor unit71 when the system 2 adequately performs cleaning or mixing.

In a next step 306 at least one current property T₂, t₂, A₂, f₂ of the signal Ss generated by the sensor unit 71 is registered when the fluid nozzle 112 ejects liquid L towards the interior surface 41 of the tank 40. This is done during a measuring period ΔT2 that may referred to as an operation period ΔT2 and the property T₂, t₂, A₂, f₂ is of the same type as the reference property T_{ref}, t_{ref}, A_{ref}, f_{ref} retrieved in step 305.

In a next step 307 the current property T₂, t₂, A₂, f₂ of the signal Ss generated by the sensor unit 71 in step 306 is compared with reference property T_{ref}, t_{ref}, A_{ref}, f_{ref} that was retrieved in step 305. If it is determined, e.g. in a next step 308, that the difference (deviation) is above a predetermined level, a next step 309 of initiating 309 a message indicative of the deviation is performed. The comparison may implement any conventional operations for comparing various signal properties, and the initiation of the message may be done according to any suitable, conventional techniques.

For example, the comparison may comprise subtracting the reference property from the current property. If the difference is beyond or outside a predetermined level (tolerance), the message indicative of the deviation is initiated. This process may be applied for one any of e.g. a duration of a signal impulse, a signal amplitude value or a signal frequency value. Suitable predetermined levels or tolerance values may be empirically determined, for example by setting the levels such that sufficient cleaning or mixing is obtained. It is also possible to determine the deviation on basis on a combination of or aggregated differences between any of a signal impulse, a signal amplitude value or a signal frequency value. Optionally or alternatively, the difference may be determined on basis of comparing the reference property in form of a reference signal pattern with a current property in form of a current signal pattern. A signal pattern typically includes several signal properties that can be found within a predetermined time window, such as the window indicated by box 401 in Fig. 3. Any suitable mathematical methods for comparing different values or signal may be used in this process.

In a next step 310 it is determined if the cleaning or mixing operation is complete, e.g. by establishing that a predetermined time has lapsed. If the operation is not complete step 306 is re-entered. If the operation is complete a next step 311 is entered for determining if the reference property T_{ref}, t_{ref}, A_{ref}, f_{ref} shall be reset or not. Conditions for determining reset may, for example, include establishing the number of cleaning or mixing operations that has been performed by the system 2. For this example, if less than a predetermined number of operations has been performed, reset is not done and step 304 is re-entered for initiating a new liquid ejection operation.

If reset of the reference property T_{ref}, t_{ref}, A_{ref}, f_{ref} shall be done step 301 is entered. Step 301 comprises initialization of an operation (cleaning or mixing) for which the reference property shall be reset. Next, a current property T₁, t₁, A₁, f₁ of the signal Ss generated by the sensor unit 71 is registered when the fluid nozzle 112 ejects liquid L towards the interior surface 41 of the tank 40. This is done during a measuring period ΔT1 that may referred to as initiation or calibration period ΔT1, and the current property T₁, t₁, A₁, f₁ is of the same type as the reference property that shall be reset.

In a next step 302 the property T₁, t₁, A₁, f₁ is used for generating a reference property. This step may include any suitable signal enhancement and processing, including application of tolerance values. Step 302 may however be omitted, typically depending on how the comparison in step 307 is done.

In a next step 303 the reference property generated in step 302, or the current property obtained in step 301, if step 302 is omitted, is stored in the memory unit 32. As indicated, steps 301-303 represents initialization or calibration of the system 2. Before the storing in the memory unit 32, the cleaning or mixing operation is typically manually validated by e.g. visual inspection or by analyzing a mixing sample, such that it may be ensured that the new reference property is indicative of adequate cleaning or mixing.

Calibration may be done in other ways. For example by implementing a step 312 of directly downloading (inputting) a reference property T_{ref}, t_{ref}, A_{ref}, f_{ref} in the memory unit 32. The downloaded reference property may then be an experience-based property that previously has been obtained for similar systems and tanks.

When the method is performed the current property T₂, t₂, A₂, f₂ obtained in step 306 may continuously be stored in the memory unit 32 to provide a validation record of the cleaning or mixing operation. The validation record may contain a time sequence of values of the current properties and/or a time sequence of signal values in the sensor signal Ss. The validation record may in another step 313 of the method be uploaded (outputted) from the memory unit 32, for example in form of a cleaning or mixing report that allows the cleaning alt. mixing to be analyzed. A validation record may be necessary to fulfill regulatory requirements, e.g. in the food and pharmaceutical industry.

The method of monitoring is iterative in the sense that step 306 may be continuously re-entered as long the mixing or cleaning operation is ongoing. Moreover, calibration may be performed any number of times by re-entering step 301.

The method yields a number of advantages and may include additional features. For example, in one implementation, steps 307 and 308 may process the current property and/or reference property for detection of unacceptable differences there between, which typically is indicative of malfunctions in the liquid ejection system 2, e.g. by comparing the properties for verifying that a predetermined pattern of liquid is ejected in the tank. The reference property may been obtained by mathematical modeling of the liquid ejection system for the specific tank and downloaded in step 312, or it may be obtained in a dedicated initialization procedure (steps 301-303). To reduce the impact of the current property T₂, t₂, A₂, f₂, steps 307, 308 may operate to detect the malfunction based on a time average, optionally weighted, of the most recent values of the current property. The malfunction may include an impaired rotation (or lack of rotation) of the rotary head 106 or the rotary hub 110, a complete or partial clogging of one or more nozzles 112, and an inability of a pump to supply an adequate amount of liquid to the liquid ejection system 2. A failure of a pump may be monitored by aggregating (e.g. summing) amplitude values for consecutive jets from different nozzles 112 and monitoring the aggregated value as a function of time. In the event that a malfunction is detected, i.e. if the difference in step 308 is more than allowed, an audible alarm and/or a visual signal may be issued in step 309 to alert an operator of the liquid ejection system, e.g. via the user interface 38 (Fig. 1).

In another implementation, step the method may be used to verify that the tank has been properly cleaned or a content properly mixed. These implementations are fully equivalent to the above-described detection of malfunction.

In another implementation, steps 307 and 308 may process the current property T₂, t₂, A₂, f₂ and the reference property T_{ref}, t_{ref}, A_{ref}, f_{ref} for analyzing a movement pattern of the jets inside the tank. In one example, the current properties are analyzed for the purpose of validating a cleaning process for a specific tank. In another example, the properties are analyzed for the purpose of validating or improving a mathematical model of the cleaning or mixing process in the tank. In yet another example, the properties are analyzed for determining their functional dependence on various control or design parameters, such as the pressure of the liquid, the type of liquid, the number of nozzles, the type of nozzles, the rotation speed of the rotary head 106 and/or the rotary hub 110, the size and configuration of the tank, the placement of the liquid ejection system etc, for example for the purpose of optimizing the cleaning or mixing process.

Generally, the monitoring process according to the various embodiments disclosed herein may be implemented by a data processing device, such as the processing unit 30, which is connected to sample or otherwise acquire measurement values from the sensor unit 71. With reference to Fig. 1, the data processing device may be separate from the processing unit 30 that controls the operation of the liquid ejection system.

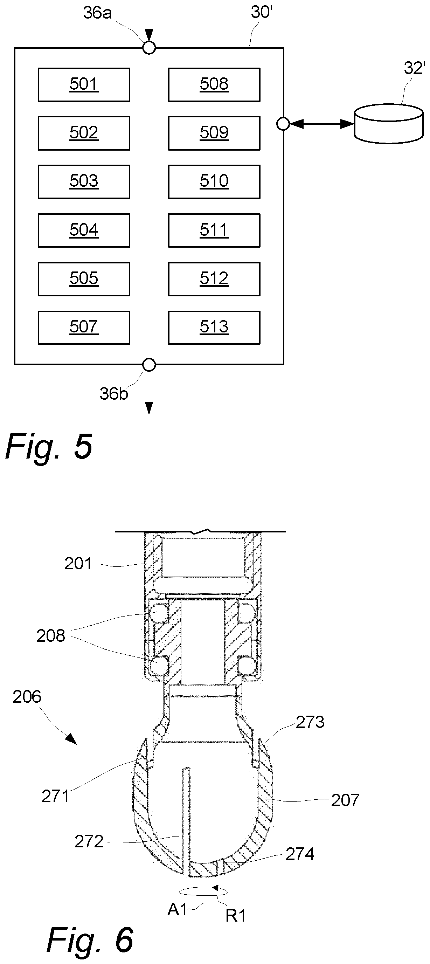

Fig. 5 shows an example of a data processing device 30' configured to implement the monitoring process in Fig. 4. The device 30' includes an input 36a for receiving the sensor signal Ss. The device 30' further includes a registration module (or means) 501 for obtaining current properties in step 301 and 306, a property generation module (or means) 502 for generating the reference property in step 302, a storing module (or means) 503 for storing the reference property in step 303, an initiation module (or means) 504 for initiating cleaning or mixing in step 304, a property retrieval module (or means) 505 for retrieving the reference property in step 305, a comparison module (or means) 507 for comparing the properties in step 307, a determination module (or means) 508 for performing step 308, a message initiation module (or means) 509 for initiating the message in step 309, a determination module (or means) 510 for determining whether the operation is complete or not in step 310, a determination module (or means) 511 for determining whether the calibration shall be performed or not in step 311, an inputting module (or means) 512 for downloading data into the memory unit 32 in step 312, an outputting module (or means) 513 for uploading or outputting data from the memory unit 32 in step 513, and an output 36b for outputting data representative of the outcome of the monitoring. As indicated in Fig. 5, the device 30' may be electrically connected to an electronic memory unit 32', e.g. for retrieval of reference properties or storage of current properties.

The device 30' may be implemented by special-purpose software (or firmware) run on one or more general-purpose or special-purpose computing devices. In this context, it is to be understood that each "module" or "means" of such a computing device refers to a conceptual equivalent of a method step; there is not always a one-to-one correspondence between elements/means and particular pieces of hardware or software routines. One piece of hardware sometimes comprises different modules/means. For example, a processing unit may serve as one module/means when executing one instruction, but serve as another module/means when executing another instruction. In addition, one module/means may be implemented by one instruction in some cases, but by a plurality of instructions in some other cases. Naturally, it is conceivable that one or more modules (means) are implemented entirely by analog hardware components.

The software controlled device 30' may include one or more processing units (cf. 31 in Fig. 1), e.g. a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). The device 30' may further include a system memory and a system bus that couples various system components including the system memory to the processing unit. The system bus may be any of several types of bus structures including a memory bus or memory controller, a peripheral bus, and a local bus using any of a variety of bus architectures. The system memory may include computer storage media in the form of volatile and/or non-volatile memory such as read only memory (ROM), random access memory (RAM) and flash memory. The special-purpose software, the reference values, and any other data needed during execution, may be stored in the system memory, or on other removable/non-removable volatile/non-volatile computer storage media which is included in or accessible to the computing device, such as magnetic media, optical media, flash memory cards, digital tape, solid state RAM, solid state ROM, etc. The data processing device may include one or more communication interfaces, such as a serial interface, a parallel interface, a USB interface, a wireless interface, a network adapter, etc, as well as one or more data acquisition devices, such as an A/D converter. The special-purpose software may be provided to the device 30' on any suitable computer-readable medium, including a record medium, and a read-only memory.

With reference to Fig. 6 another embodiment of a rotary head 206 for the system of Fig. 1 is illustrated. The rotary head 206 is arranged at a lower end of a pipe 201 that is similar to the pipe 101 of Fig. 1. The rotary head 206 comprises a ball-shaped body 207 that is connected to the pipe 201 via a bearing 208 that allows the rotary head 206 to rotate in a first direction about an axis A1 that is parallel to the pipe 201. Liquid may enter the rotary head 206 from the pipe 201 and is ejected from the rotary head 206 via a number of slits 271-274 in the body 207. The slits 271-274 eject, in a conventional manner, the fluid in directions that effects a rotational movement of the rotary head 206, and, as known within the art, a predetermined flow of the liquid effects a predetermined rotational speed of the rotary head 206. From this follows that the slits 271-274 form a drive member that provides rotation of the rotary head 206 about the axis A1, such that liquid is ejected into the tank in a predetermined pattern. In this embodiment no motor like the motor 21 of Fig. 1 is required. However, the method of monitoring the system 2 when equipped with the rotary head 206 remains that same as when it equipped with the rotary head 106 shown in Fig. 1. Other embodiments of rotary heads are just as conceivable, as long as the sensor unit 71 may generate a signal Ss indicative that liquid from the rotary head comes into contact with the interior surface 41 of the tank 40.

The liquid ejection system may be mounted in an opening in any wall portion of the tank to be cleaned, and the pipe may thus extend into the tank in any desired direction. Further, the sensor unit need not be mounted on the liquid ejection system (e.g. in the mounting flange 102), but may instead be mounted directly in a wall portion of the tank. Additional sensors signals from additional sensor units may be aggregated in the signal Ss or may be sent as separate signals to the processing unit 30.

From the description above follows that, although various embodiments of the invention have been described and shown, the invention is not restricted thereto, but may also be embodied in other ways within the scope of the subject-matter defined in the following claims.

## Claims

1. A monitoring arrangement for a liquid ejection system (2) that comprises an ejection apparatus (100) having a pipe (101) configured to extend into a tank (40) and to receive a liquid (L), wherein a rotary head (106) is arranged on the pipe (101) and is fitted with a fluid nozzle (112) for ejecting the liquid (L) in a pattern on an interior surface (41) of the tank (40), the monitoring arrangement comprising
a sensor unit (71) configured to be mounted to the tank (40) such that the sensor unit (71) generates a signal (Ss) indicative of liquid (L) coming into contact with the interior surface (41) of the tank (40), and
a processing unit (30) configured to receive from the sensor unit (71) the signal (Ss) indicative of liquid (L) coming into contact with the interior surface (41) of the tank (40),
the monitoring arrangement wherein
the processing unit (30) is configured to
- retrieve from a memory unit (32) a reference property (T_{ref}, t_{ref}, A_{ref}, f_{ref}) that is indicative of liquid (L) coming into contact with the interior surface (41),
- register, during a measuring period (ΔT2) when the fluid nozzle (112) ejects liquid (L) towards the interior surface (41) of the tank (40), at least one current property (T₂, t₂, A₂, f₂) of the signal (Ss) generated by the sensor unit (71),
- compare the current property (T₂, t₂, A₂, f₂) with the reference property (T_{ref}, t_{ref}, A_{ref}, f_{ref}), and
- initiate, if the current property (T₂, t₂, A₂, f₂) deviates from the reference property (T_{ref}, t_{ref}, A_{ref}, f_{ref}) beyond a predetermined level, a message indicative of the deviation, **characterised in that** the processing unit (30) is further configured to
- register, during a further measuring period when the fluid nozzle (112) ejects liquid (L) towards the interior surface (41), at least one current property of the signal (Ss), and
- store the current property of the signal (Ss) as the reference property in the memory unit (32).

2. A monitoring arrangement according to claim 1, wherein the processing unit (30) is configured to
- register, during an initiation period (ΔT1) when the fluid nozzle (112) ejects liquid (L) towards the interior surface (41), at least one current property (T₁, t₁, A₁, f₁) of the signal (Ss), and
- store the current property (T₁, t₁, A₁, f₁) of the signal (Ss) as the reference property (T_{ref}, t_{ref}, A_{ref}, f_{ref}) in the memory unit (32).

3. A monitoring arrangement according to claim 1 or 2, wherein the measuring period (ΔT2) is associated with
- cleaning of the interior surface (41) of the tank (40), or
- mixing of a liquid content of the tank (40).

4. A monitoring arrangement according to any one of claims 1 - 3, wherein the property retrieved from the memory unit (32) comprises a duration (T) between signal impulses.

5. A monitoring arrangement according to any one of claims 1 - 4, wherein the property retrieved from the memory unit (32) comprises a duration (t) of a signal impulse.

6. A monitoring arrangement according to any one of claims 1 - 5, wherein the property retrieved from the memory unit (32) comprises a signal amplitude value (A).

7. A monitoring arrangement according to any one of claims 1 - 6, wherein the property retrieved from the memory unit (32) comprises a signal frequency (f) value.

8. A monitoring arrangement according to any one of claims 1 - 7, wherein the property retrieved from the memory unit (32) comprises a signal pattern.

9. A monitoring arrangement according to any one of claims 1 - 8, wherein the processing unit (30) is configured to iteratively,
- register, during a further measuring period when the fluid nozzle (112) ejects liquid (L) towards the interior surface (41), at least one current property of the signal (Ss)
- compare the current property with the reference property (T_{ref}, t_{ref}, A_{ref}, f_{ref}), and
- initiate, if the current property deviates from the reference property (T_{ref}, t_{ref}, A_{ref}, f_{ref}) beyond a predetermined level, a message indicative of the deviation.

10. A monitoring arrangement according to any one of claims 1 - 9, wherein the sensor unit (71) is configured to
- be mounted inside the tank (40) such that the sensor unit (71) is subjected to liquid (F) when the fluid nozzle (112) ejects liquid (L), and
- generate a signal (Ss) indicative of liquid (L) coming into contact with the sensor unit (71).

11. A monitoring arrangement according to any one of claims 1 - 10, wherein the sensor unit (71) is a pressure sensor with a sensing surface that extends over a distance of at least 1 cm along the interior surface (41) of the tank (40).

12. A liquid ejection system comprising
a liquid ejection apparatus (100) having a pipe (101) configured to extend into a tank (40) and to receive a liquid (L), wherein a rotary head (106) is arranged on the pipe (101) and is fitted with a fluid nozzle (112) for ejecting the liquid (L) in a pattern on an interior surface (41) of the tank (40), and
a monitoring arrangement according to any one of claims 1 - 11.

13. A method of monitoring a liquid ejection system (2) comprising an ejection apparatus (100) having a pipe (101) configured to extend into a tank (40) and to receive a liquid (L), wherein a rotary head (106) is arranged on the pipe (101) and is fitted with a fluid nozzle (112) for ejecting the liquid (L) in a pattern on an interior surface (41) of the tank (40), wherein a sensor unit (71) is configured to be mounted to the tank (40) such that the sensor unit (71) generates a signal (Ss) indicative of liquid (L) coming into contact with the interior surface (41) of the tank (40),
the method comprising
- retrieving (305) from a memory unit (32) a reference property (T_{ref}, t_{ref}, A_{ref}, f_{ref}) that is indicative of liquid (L) coming into contact with the interior surface (41),
- registering (306), during a measuring period (ΔT2) when the fluid nozzle (112) ejects liquid (L) towards the interior surface (41) of the tank (40), at least one current property (T₂, t₂, A₂, f₂) of the signal (Ss) generated by the sensor unit (71),
- comparing (307) the current property (T₂, t₂, A₂, f₂) with the reference property (T_{ref}, t_{ref}, A_{ref}, f_{ref}), and
- initiating (308, 309), if the current property (T₂, t₂, A₂, f₂) deviates from the reference property (T_{ref}, t_{ref}, A_{ref}, f_{ref}) beyond a predetermined level, a message indicative of the deviation, **characterised in that** the method further comprises to
- register, during a further measuring period when the fluid nozzle (112) ejects liquid (L) towards the interior surface (41), at least one current property of the signal (Ss), and
- store the current property of the signal (Ss) as the reference property in the memory unit (32).

## Patentansprüche

1. Überwachungsanordnung für ein Flüssigkeitsausstoßsystem (2), das eine Ausstoßvorrichtung (100) mit einem Rohr (101) umfasst, welches dafür konfiguriert ist, sich in einen Tank (40) zu erstrecken und eine Flüssigkeit (L) aufzunehmen, worin ein Drehkopf (106) an dem Rohr (101) angeordnet ist und mit einer Fluiddüse (112) versehen ist, und zwar zum Ausstoßen der Flüssigkeit (L) in einem Muster auf einer inneren Oberfläche (41) des Tanks (40), wobei die Überwachungsanordnung umfasst:
eine Sensoreinheit (71), die dafür konfiguriert ist, an dem Tank (40) montiert zu werden, sodass die Sensoreinheit (71) ein Signal (Ss) erzeugt, welches anzeigt, dass Flüssigkeit (L) mit der inneren Oberfläche (41) des Tanks (40) in Berührung kommt, und
eine Verarbeitungseinheit (30), die dafür konfiguriert ist, von der Sensoreinheit (71) das Signal (Ss) zu empfangen, das anzeigt, dass Flüssigkeit (L) mit der inneren Oberfläche (41) des Tanks (40) in Berührung kommt,
worin die Verarbeitungseinheit (30) dafür konfiguriert ist,
- aus einer Speichereinheit (32) eine Referenzeigenschaft (T_{ref}, t_{ref}, A_{ref}, f_{ref}) abzurufen, die anzeigt, dass Flüssigkeit (L) mit der inneren Oberfläche (41) in Berührung kommt,
- während einer Messperiode (ΔT2), wenn die Fluiddüse (112) Flüssigkeit (L) in Richtung der inneren Oberfläche (41) des Tanks (40) ausstößt, mindestens eine aktuelle Eigenschaft (T₂, t₂, A₂, f₂) des durch die Sensoreinheit (71) erzeugten Signals (Ss) zu registrieren,
- die aktuelle Eigenschaft (T₂, t₂, A₂, f₂) mit der Referenzeigenschaft (T_{ref}, t_{ref}, A_{ref}, f_{ref}) zu vergleichen, und
- wenn die aktuelle Eigenschaft (T₂, t₂, A₂, f₂) von der Referenzeigenschaft (T_{ref}, t_{ref}, A_{ref}, f_{ref}) über ein vorbestimmtes Ausmaß hinaus abweicht, eine Meldung zu veranlassen, welche die Abweichung anzeigt, **dadurch gekennzeichnet, dass** die Verarbeitungseinheit (30) ferner dafür konfiguriert ist,
- während einer weiteren Messperiode, wenn die Fluiddüse (112) Flüssigkeit (L) in Richtung der inneren Oberfläche (41) ausstößt, mindestens eine aktuelle Eigenschaft des Signals (Ss) zu registrieren, und
- die aktuelle Eigenschaft des Signals (Ss) als die Referenzeigenschaft in der Speichereinheit (32) zu speichern.

2. Überwachungsanordnung nach Anspruch 1, worin die Verarbeitungseinheit (30) dafür konfiguriert ist
- während einer Einleitungsperiode (ΔT1), wenn die Fluiddüse (112) Flüssigkeit (L) in Richtung der inneren Oberfläche (41) ausstößt, mindestens eine aktuelle Eigenschaft (T₁, t₁, A₁, f₁) des Signals (Ss) zu registrieren, und
- die aktuelle Eigenschaft (T₁, t₁, A₁, f₁) des Signals (Ss) als die Referenzeigenschaft (T_{ref}, t_{ref}, A_{ref}, f_{ref}) in der Speichereinheit (32) zu speichern.

3. Überwachungsanordnung nach Anspruch 1 oder 2, worin die Messperiode (ΔT2) assoziiert ist mit dem
- Reinigen der inneren Oberfläche (41) des Tanks (40), oder
- Mischen eines flüssigen Inhalts des Tanks (40).

4. Überwachungsanordnung nach einem der Ansprüche 1 bis 3, worin die aus der Speichereinheit (32) abgerufene Eigenschaft eine Dauer (T) zwischen Signalimpulsen umfasst.

5. Überwachungsanordnung nach einem der Ansprüche 1 bis 4, worin die aus der Speichereinheit (32) abgerufene Eigenschaft eine Dauer (t) eines Signalimpulses umfasst.

6. Überwachungsanordnung nach einem der Ansprüche 1 bis 5, worin die aus der Speichereinheit (32) abgerufene Eigenschaft einen Signalamplitudenwert (A) umfasst.

7. Überwachungsanordnung nach einem der Ansprüche 1 bis 6, worin die aus der Speichereinheit (32) abgerufene Eigenschaft einen Signalfrequenzwert (f) umfasst.

8. Überwachungsanordnung nach einem der Ansprüche 1 bis 7, worin die aus der Speichereinheit (32) abgerufene Eigenschaft ein Signalmuster umfasst.

9. Überwachungsanordnung nach einem der Ansprüche 1 bis 8, worin die Verarbeitungseinheit (30) dafür konfiguriert ist, iterativ
- während einer weiteren Messperiode, wenn die Fluiddüse (112) Flüssigkeit (L) in Richtung der inneren Oberfläche (41) ausstößt, mindestens eine aktuelle Eigenschaft des Signals (Ss) zu registrieren,
- die aktuelle Eigenschaft mit der Referenzeigenschaft (T_{ref}, t_{ref}, A_{ref}, f_{ref}) zu vergleichen, und
- wenn die aktuelle Eigenschaft von der Referenzeigenschaft (T_{ref}, t_{ref}, A_{ref}, f_{ref}) über ein vorbestimmtes Maß hinaus abweicht, eine Meldung zu veranlassen, welche die Abweichung anzeigt.

10. Überwachungsanordnung nach einem der Ansprüche 1 bis 9, worin die Sensoreinheit (71) dafür konfiguriert ist,
- im Inneren des Tanks (40) so montiert zu werden, dass die Sensoreinheit (71) einer Flüssigkeit (F) ausgesetzt wird, wenn die Fluiddüse (112) Flüssigkeit (L) ausscheidet, und
- ein Signal (Ss) zu erzeugen, das anzeigt, dass Flüssigkeit (L) mit der Sensoreinheit (71) in Berührung kommt.

11. Überwachungsanordnung nach einem der Ansprüche 1 bis 10, worin die Sensoreinheit (71) ein Drucksensor mit einer Sensorfläche ist, die sich über eine Strecke von mindestens 1 cm entlang der inneren Oberfläche (41) des Tanks (40) erstreckt.

12. Flüssigkeitsausstoßsystem, umfassend:
eine Flüssigkeitsausstoßvorrichtung (100) mit einem Rohr (101), das dafür konfiguriert ist, sich in einen Tank (40) zu erstrecken und eine Flüssigkeit (L) aufzunehmen, worin ein Drehkopf (106) an dem Rohr (101) angeordnet ist und mit einer Fluiddüse (112) versehen ist, und zwar zum Ausstoßen der Flüssigkeit (L) in einem Muster auf einer inneren Oberfläche (41) des Tanks (40), und
eine Überwachungseinrichtung nach einem der Ansprüche 1 bis 11.

13. Verfahren zum Überwachen eines Flüssigkeitsausstoßsystems (2), welches eine Ausstoßvorrichtung (100) mit einem Rohr (101) umfasst, das dafür konfiguriert ist, sich in einen Tank (40) zu erstrecken und eine Flüssigkeit (L) aufzunehmen, worin ein Drehkopf (106) an dem Rohr (101) angeordnet ist und mit einer Fluiddüse (112) versehen ist, und zwar zum Ausstoßen der Flüssigkeit (L) in einem Muster auf einer inneren Oberfläche (41) des Tanks (40), worin eine Sensoreinheit (71) dafür konfiguriert ist, an dem Tank (40) montiert zu werden, sodass die Sensoreinheit (71) ein Signal (Ss) erzeugt, welches anzeigt, dass Flüssigkeit (L) mit der inneren Oberfläche (41) des Tanks (40) in Berührung kommt,
wobei das Verfahren umfasst
- Abrufen (305) einer Referenzeigenschaft (T_{ref}, t_{ref}, A_{ref}, f_{ref}), die anzeigt, dass Flüssigkeit (L) mit der inneren Oberfläche (41) in Berührung kommt, aus einer Speichereinheit (32),
- Registrieren (306) mindestens einer aktuellen Eigenschaft (T₂, t₂, A₂, f₂) des durch die Sensoreinheit (71) erzeugten Signals (Ss) während einer Messperiode (ΔT2), wenn die Fluiddüse (112) Flüssigkeit (L) in Richtung der inneren Oberfläche (41) des Tanks (40) ausstößt,
- Vergleichen (307) der aktuellen Eigenschaft (T₂, t₂, A₂, f₂) mit der Referenzeigenschaft (T_{ref}, t_{ref}, A_{ref}, f_{ref}), und
- wenn die aktuelle Eigenschaft (T₂, t₂, A₂, f₂) von der Referenzeigenschaft (T_{ref}, t_{ref}, A_{ref}, f_{ref}) über ein vorbestimmtes Maß hinaus abweicht, Veranlassen (308, 309) einer Meldung, welche die Abweichung anzeigt, **dadurch gekennzeichnet, dass** das Verfahren ferner umfasst:
- während einer weiteren Messperiode, wenn die Fluiddüse (112) Flüssigkeit (L) in Richtung der inneren Oberfläche (41) ausstößt, mindestens eine aktuelle Eigenschaft des Signals (Ss) zu registrieren, und
- die aktuelle Eigenschaft des Signals (Ss) als die Referenzeigenschaft in der Speichereinheit (32) zu speichern.

## Revendications

1. Dispositif de surveillance pour un système d'éjection de liquide (2) qui comprend un appareil d'éjection (100) présentant un tuyau (101) configuré afin de s'étendre dans un réservoir (40) et afin de recevoir un liquide (L), dans lequel une tête rotative (106) est ménagée sur le tuyau (101) et est équipée d'une buse de fluide (112) permettant d'éjecter le liquide (L) dans un motif sur une surface intérieure (41) du réservoir (40), le dispositif de surveillance comprenant
une unité de capteur (71) configurée afin d'être montée sur le réservoir (40), de sorte que l'unité de capteur (71) génère un signal (Ss) indicatif de liquide (L) entrant en contact avec la surface intérieure (41) du réservoir (40), et
une unité de traitement (30) configurée afin de recevoir de l'unité de capteur (71) le signal (Ss) indicatif de liquide (L) entrant en contact avec la surface intérieure (41) du réservoir (40),
le dispositif de surveillance dans lequel l'unité de traitement (30) est configurée afin
- de récupérer d'une unité de mémoire (32) une propriété de référence (T_{ref}, t_{ref}, A_{ref}, f_{ref}) qui est indicative de liquide (L) entrant en contact avec la surface intérieure (41),
- d'enregistrer, pendant une période de mesure (ΔT2) lorsque la buse de fluide (112) éjecte du liquide (L) vers la surface intérieure (41) du réservoir (40), au moins une propriété actuelle (T₂, t₂, A₂, f₂) du signal (Ss) généré par l'unité capteur (71),
- de comparer la propriété actuelle (T₂, t₂, A₂, f₂) à la propriété de référence (T_{ref}, t_{ref}, A_{ref}, f_{ref}), et
- d'émettre, si la propriété actuelle (T₂, t₂, A₂, f₂) s'écarte de la propriété de référence (T_{ref}, t_{ref}, A_{ref}, f_{ref}) au-delà d'un niveau prédéterminé, un message indicatif de l'écart, **caractérisé en ce que** l'unité de traitement (30) est en outre configurée afin
- d'enregistrer, pendant une période de mesure ultérieure lorsque la buse de fluide (112) éjecte du liquide (L) vers la surface intérieure (41), au moins une propriété actuelle du signal (Ss), et
- de stocker la propriété actuelle du signal (Ss) comme la propriété de référence dans l'unité de mémoire (32).

2. Dispositif de surveillance selon la revendication 1, dans lequel l'unité de traitement (30) est configurée afin
- d'enregistrer, pendant une période d'initiation (ΔT1) lorsque la buse de fluide (112) éjecte du liquide (L) vers la surface intérieure (41), au moins une propriété actuelle (T₁, t₁, A₁, f₁) du signal (Ss), et
- de stocker la propriété actuelle (T₁, t₁, A₁, f₁) du signal (Ss), comme la propriété de référence (T_{ref}, t_{ref}, A_{ref}, f_{ref}) dans l'unité de mémoire (32).

3. Dispositif de surveillance selon la revendication 1 ou 2, dans lequel la période de mesure (ΔT2) est associée au
- nettoyage de la surface intérieure (41) du réservoir (40), ou
- mélange d'un contenu liquide du réservoir (40).

4. Dispositif de surveillance selon l'une quelconque des revendications 1 à 3, dans lequel la propriété récupérée de l'unité de mémoire (32) comprend une durée (T) entre des impulsions de signal.

5. Dispositif de surveillance selon l'une quelconque des revendications 1 à 4, dans lequel la propriété récupérée de l'unité de mémoire (32) comprend une durée (t) d'une impulsion de signal.

6. Dispositif de surveillance selon l'une quelconque des revendications 1 à 5, dans lequel la propriété récupérée de l'unité de mémoire (32) comprend une valeur d'amplitude de signal (A).

7. Dispositif de surveillance selon l'une quelconque des revendications 1 à 6, dans lequel la propriété récupérée de l'unité de mémoire (32) comprend une valeur de fréquence de signal (f).

8. Dispositif de surveillance selon l'une quelconque des revendications 1 à 7, dans lequel la propriété récupérée de l'unité de mémoire (32) comprend un motif de signal.

9. Dispositif de surveillance selon l'une quelconque des revendications 1 à 8, dans lequel l'unité de traitement (30) est configurée afin, itérativement,
- d'enregistrer, pendant une période de mesure ultérieure lorsque la buse de fluide (112) éjecte du liquide (L) vers la surface intérieure (41), au moins une propriété actuelle du signal (Ss)
- de comparer la propriété actuelle à la propriété de référence (T_{ref}, t_{ref}, A_{ref}, f_{ref}), et
- d'émettre, si la propriété actuelle s'écarte de la propriété de référence (T_{ref}, t_{ref}, A_{ref}, f_{ref}) au-delà d'un niveau prédéterminé, un message indicatif de l'écart.

10. Dispositif de surveillance selon l'une quelconque des revendications 1 à 9, dans lequel l'unité de capteur (71) est configurée afin
- d'être montée à l'intérieur du réservoir (40) de sorte que l'unité de capteur (71) soit soumise à un liquide (F) lorsque la buse de fluide (112) éjecte un liquide (L), et
- de générer un signal (Ss) indicatif de liquide (L) entrant en contact avec l'unité de capteur (71).

11. Dispositif de surveillance selon l'une quelconque des revendications 1 à 10, dans lequel l'unité de capteur (71) est un capteur de pression avec une surface de détection qui s'étend sur une distance d'au moins 1 cm le long de la surface intérieure (41) du réservoir (40).

12. Système d'éjection de liquide comprenant :
un appareil d'éjection de liquide (100) présentant un tuyau (101) configuré afin de s'étendre dans un réservoir (40) et de recevoir un liquide (L), dans lequel une tête rotative (106) est agencée sur le tuyau (101) et est équipée d'une buse de fluide (112) permettant d'éjecter le liquide (L) dans un motif sur une surface intérieure (41) du réservoir (40), et
un dispositif de surveillance selon l'une quelconque des revendications 1 à 11.

13. Procédé de surveillance d'un système d'éjection de liquide (2) comprenant un appareil d'éjection (100) présentant un tuyau (101) configuré afin de s'étendre dans un réservoir (40) et afin de recevoir un liquide (L), dans lequel une tête rotative (106) est agencée sur le tuyau (101) et est équipée d'une buse de fluide (112) permettant d'éjecter le liquide (L) dans un motif sur une surface intérieure (41) du réservoir (40), dans lequel une unité de capteur (71) est configurée afin d'être montée sur le réservoir (40) de sorte que l'unité de capteur (71) génère un signal (Ss) indicatif de liquide (L) entrant en contact avec la surface intérieure (41) du réservoir (40),
le procédé comprenant :
- la récupération (305) à partir d'une unité de mémoire (32) d'une propriété de référence (T_{ref}, t_{ref}, A_{ref}, f_{ref}) qui est indicative de liquide (L) entrant en contact avec la surface intérieure (41),
- l'enregistrement (306), pendant une période de mesure (ΔT2), lorsque la buse de fluide (112) éjecte un liquide (L) vers la surface intérieure (41) du réservoir (40), d'au moins une propriété actuelle (T₂, t₂, A₂, f₂) du signal (Ss) généré par l'unité de capteur (71),
- la comparaison (307) de la propriété actuelle (T₂, t₂, A₂, f₂) à la propriété de référence (T_{ref}, t_{ref}, A_{ref}, f_{ref}), et
- l'émission (308, 309), si la propriété actuelle (T₂, t₂, A₂, f₂) dévie de la propriété de référence (T_{ref}, t_{ref}, A_{ref}, f_{ref}) au-delà d'un niveau prédéterminé, d'un message indicatif de l'écart, **caractérisé en ce que** le procédé comprend en outre
- l'enregistrement, pendant une autre période de mesure lorsque la buse de fluide (112) éjecte un liquide (L) vers la surface intérieure (41), d'au moins une propriété actuelle du signal (Ss), et
- le stockage de la propriété actuelle du signal (Ss) comme propriété de référence dans l'unité de mémoire (32).
